# EUROPEAN PATENT SPECIFICATION

(11) **EP 4 231 548 B1**
(45) Date of publication and mention of the grant of the patent: **16.09.2026**
(21) Application number: 21896724.8
(22) Date of filing: 01.11.2021
(51) Int. Cl.: H04B 10/2575, H04B 10/50, H04J 14/02, H04B 10/2507

(54) **COMMUNICATION APPARATUS, COMMUNICATION SYSTEM AND NONLINEAR COMPENSATION METHOD**
KOMMUNIKATIONSVORRICHTUNG, KOMMUNIKATIONSSYSTEM UND NICHTLINEARES KOMPENSATIONSVERFAHREN
APPAREIL DE COMMUNICATION, SYSTÈME DE COMMUNICATION ET PROCÉDÉ DE COMPENSATION NON LINÉAIRE

(30) Priority: 30.11.2020 CN 202011383136
(43) Date of publication of application: 23.08.2023
(73) Proprietor: Huawei Technologies Co., Ltd., Shenzhen, Guangdong 518129 (CN)
(72) Inventor: LV, Yibo, Shenzhen, Guangdong 518129 (CN); WANG, Tianxiang, Shenzhen, Guangdong 518129 (CN); LI, Xu, Shenzhen, Guangdong 518129 (CN); ZHANG, Weiwei, Shenzhen, Guangdong 518129 (CN); JI, Chunhui, Shenzhen, Guangdong 518129 (CN)
(74) Representative: Gill Jennings & Every LLP
(86) International application number: PCT/CN2021/127889
(87) International publication number: WO 2022/111223

(56) References cited:
- CN-A- 1 404 236
- CN-A- 107 078 779
- CN-A- 107 343 284
- CN-B- 102 457 458
- US-A1- 2011 142 075
- US-B2- 8 611 261
- MATEO CARLOS ET AL: "Digital predistortion of a full-duplex Radio-over-Fiber mobile fronthaul link with feedback loop", 2017 13TH INTERNATIONAL WIRELESS COMMUNICATIONS AND MOBILE COMPUTING CONFERENCE (IWCMC), IEEE, 26 June 2017 (2017-06-26), pages 1425 - 1430, XP033125444, DOI: 10.1109/IWCMC.2017.7986493

## Description

### TECHNICAL FIELD

This application relates to the field of wireless communication, and in particular, to a communication apparatus, a communication system, and a nonlinear compensation method.

### BACKGROUND

Compared with a digital common public radio interface (Common Public Radio Interface, CPRI)/enhanced CPRI (Enhanced CPRI, eCPRI) remote technology, a radio over fiber (Radio over Fiber, RoF) technology can improve a data transmission rate, and also effectively simplify hardware structures of a remote radio unit (Remote Radio Unit, RRU) and a baseband processing unit (Building Baseband Unit, BBU) in an access network.

However, in the RoF system, a large quantity of nonlinear elements, for example, devices such as an optical-to-electrical (Optical-to-Electrical, O/E) conversion device, an electrical-to-optical (Electrical-to-Optical, E/O) conversion device, and a power amplifier (Power Amplifier, PA), are disposed in the RRU. As a result, nonlinear distortion of a signal (a downlink signal) between the RRU and the BBU is caused. To compensate for the nonlinear distortion of the downlink signal, a feedback link is usually set from an RRU side to a BBU side. The downlink signal on the RRU side is fed back to the BBU over the feedback link, and simultaneously, a nonlinear characteristic of the downlink signal is determined on the RRU side based on the feedback signal, to compensate for the nonlinear distortion of the downlink signal.

To reduce hardware complexity, the feedback link and a data link usually share a same transmission link. Therefore, a control circuit needs to be added on the RRU side, to implement switching between the data link and the feedback link. In addition, to transmit the feedback signal from the remote RRU back to the BBU, new active devices such as an E/O device, an O/E device, and a PA are introduced onto the feedback link. This causes extra power consumption, and also increases hardware complexity of the RRU.

CN102457458 relates to a digital pre-distortion realization method of a base station. US8611261 relates to a method to control channel signaling between elements in a wireless network.

### SUMMARY

Embodiments of this application provide a communication apparatus, a communication system, and a nonlinear compensation method, to reduce hardware complexity and power consumption of the communication system, and ensure a good linearization effect for the communication system, as defined in the appended claims.

According to an aspect, an embodiment of this application provides a nonlinear compensation method. The method is applied to a first communication apparatus, and the method includes:
generating a synthetic optical correlation code, where the synthetic optical correlation code indicates a working mode of one of at least one second communication apparatus connected to the first communication apparatus, the working mode includes a transmission mode of a data signal or a transmission mode of a feedback signal, different second communication apparatuses correspond to different synthetic optical correlation codes, and the feedback signal indicates a nonlinear distortion characteristic of an optoelectronic element on a transmission link from the first communication apparatus to the second communication apparatus; and sending the synthetic optical correlation code to the second communication apparatus, wherein the first communication apparatus is connected to a plurality of second communication apparatuses via a radio over fiber network, and a feedback link is sent from the second communication apparatuses to the first communication apparatus and wherein the method further comprises receiving a feedback signal from the second communication apparatus, and performing, based on the feedback signal, nonlinear compensation on the optoelectronic element on the transmission link from the first communication apparatus to the second communication apparatus.

In a possible implementation, the generating a synthetic optical correlation code includes:
modulating to-be-sent signals onto a plurality of optical carriers of different wavelengths, to obtain a plurality of optical signals obtained through modulation; and combining the plurality of optical signals obtained through modulation, to generate the synthetic optical correlation code.

In a possible implementation, the generating a synthetic optical correlation code includes:
generating a plurality of optical carriers, where different optical carriers have different wavelengths; combining the plurality of optical carriers; and modulating the plurality of combined optical carriers, to generate the synthetic optical correlation code.

According to an aspect, an embodiment of this application further provides a communication apparatus. The communication apparatus includes at least one processor and a memory communicatively connected to the at least one processor. The memory stores instructions executable by the at least one processor, and the at least one processor executes the instructions stored in the memory, so that the above method is performed.

According to an aspect, an embodiment of this application further provides a communication system. The communication apparatus includes a first communication apparatus configured to perform the method above.

According to an aspect, this application provides a computer-readable storage medium. The computer-readable storage medium stores a computer program, and when the computer program is run, the method performed by the first communication apparatus in the foregoing aspects is implemented.

According to an aspect, a computer program product is provided. The computer program product includes computer program code. When the computer program code is run, the method performed by the first communication apparatus in the foregoing aspects is performed.

### BRIEF DESCRIPTION OF DRAWINGS

FIG. 1 is a schematic diagram of an architecture of a CPRI remote network;
FIG. 2 is a schematic diagram of an architecture of an A-RoF remote network;
FIG. 3 is a schematic diagram of an architecture of a WDM-RoF system;
FIG. 4 is a schematic diagram of an architecture of a RoF system according to an embodiment of this application;
FIG. 5 is a schematic diagram of time-spectrum convolution according to a dispersion principle according to an embodiment of this application;
FIG. 6A is a schematic diagram of a structure of a BBU according to an embodiment of this application;
FIG. 6B is a schematic diagram of another structure of a BBU according to an embodiment of this application;
FIG. 7A is a schematic diagram of a structure of a control link in an RRU according to an embodiment of this application;
FIG. 7B is a schematic diagram of another structure of a control link in an RRU according to an embodiment of this application;
FIG. 8A is a schematic diagram of a structure of an optical delay line group according to an embodiment of this application;
FIG. 8B is a schematic diagram of another structure of an optical delay line group in an RRU according to an embodiment of this application;
FIG. 9A is a schematic diagram of a structure of a radio frequency link in an RRU according to an embodiment of this application;
FIG. 9B is a schematic diagram of another structure of a radio frequency link in an RRU according to an embodiment of this application;
FIG. 10 is a schematic diagram of a structure of a RoF system according to an embodiment of this application;
FIG. 11 is a schematic diagram of another structure of a RoF system according to an embodiment of this application;
FIG. 12 is a schematic diagram of still another structure of a RoF system according to an embodiment of this application;
FIG. 13 is a schematic diagram of yet another structure of a RoF system according to an embodiment of this application;
FIG. 14A is a schematic diagram of a working slot of a BBU according to an embodiment of this application;
FIG. 14B is a schematic diagram of a working slot of an RRU according to an embodiment of this application;
FIG. 15 is a schematic diagram of a working procedure of a BBU according to an embodiment of this application;
FIG. 16 is a schematic diagram of a working procedure of an RRU according to an embodiment of this application; and
FIG. 17 is a schematic diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

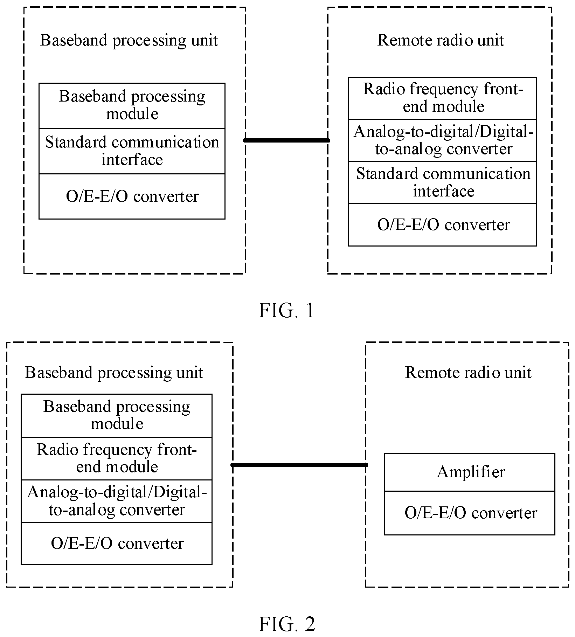

FIG. 1 is a schematic diagram of an architecture of a digital common public radio interface (Common Public Radio Interface, CPRI) remote network. A baseband processing unit (building baseband unit, BBU) and a remote radio unit (remote radio unit, RRU) may be connected to each other through an optical fiber, and communicate with each other according to a CPRI standard or an enhanced CPRI (Enhanced CPRI, eCPRI) standard. The BBU is provided with a baseband processing module, configured to: process a to-be-sent signal, and send the processed signal to the RRU. The RRU is provided with a radio frequency front-end module, configured to: process a signal from a terminal, and send the processed signal to the BBU. For ease of description, in the following, a communication link from the BBU to the RRU is referred to as a downlink, and a communication link from the RRU to the BBU is referred to as an uplink. Correspondingly, the signal sent by the BBU to the RRU may be referred to as a downlink signal, and the signal sent by the RRU to the BBU is referred to as an uplink signal.

Because signal transmission between the BBU and the RRU complies with the CPRI standard or the eCPRI standard, a standard communication interface, namely, a CPRI standard or eCPRI standard communication interface, is disposed on each of the BBU and the RRU. In addition, because the CPRI standard or the eCPRI standard requires that a baseband digital optical signal is transmitted through the optical fiber, this requires that an optical-to-electrical (optical-to-electrical, OE)-electrical-to-optical (electrical-to-optical, EO) converter is at least disposed on a downlink on a BBU side. For the RRU, the RRU needs to perform optical-to-electrical conversion, digital-to-analog conversion, up frequency conversion, filtering, and amplification processing on a received digital optical signal sent by the BBU, and then sends the processed digital optical signal to the terminal through an antenna. In addition, after receiving the signal from the terminal, the RRU performs amplification, down frequency conversion, filtering, digital-to-analog conversion, and electrical-to-optical conversion processing on the signal, to obtain a baseband digital optical signal, and then sends the baseband digital optical signal to the BBU. This requires that the RRU is at least further provided with devices such as an EO-EO converter, a digital-to-analog converter (digital-to-analog converter, DAC)/analog-to-digital converter (analog-to-digital converter, ADC), an up/down frequency converter, a power amplifier (power amplifier, PA), and a filter. Because the ADC/DAC, the EO/OE converter, and the PA are all active devices, power consumption of the RRU is large. In addition, the active devices also cause interference to a hardware structure included in the RRU.

To reduce the power consumption and interference of the RRU, the uplink or downlink can be enabled in different time periods in a time division multiplexing manner. To enable the RRU to enable the uplink or the downlink in different time periods, a control module may be disposed on the RRU, and the control module may receive and execute, from the BBU, a control command used for switching and activating the uplink or the downlink, to implement time division multiplexing of the uplink and the downlink. It should be noted that, a device having a processing and calculation function, for example, a microcontroller unit (microcontroller unit, MCU), may be disposed in the RRU, and is configured to identify a control command. For example, the MCU may be configured to identify whether the control command from the BBU is used for the uplink or the downlink.

However, the signal transmission between the BBU and the RRU complies with the CPRI standard or the eCPRI standard, in other words, the control command is still carried by using the digital optical signal. In this case, the RRU needs to be provided with the active devices such as the OE converter and the ADC in a communication link for the control command. This inevitably increases power consumption and hardware complexity of the RRU.

Therefore, an analog radio over fiber (analog radio over fiber, A-RoF) technology is used instead of a CPRI/eCPRI interface technology. FIG. 2 is a schematic diagram of an architecture of an A-RoF remote network. In an A-RoF remote system, operations such as signal modulation, digital-to-analog conversion, up/down frequency conversion, amplification, and filtering are completed on a BBU side. In this way, only necessary devices such as an antenna, an amplifier, and an EO/OE module, as shown in FIG. 2 are disposed on an RRU, with no need to deploy devices such as a DAC and an up/down frequency converter. Because the RRU is provided with fewer active hardware devices, hardware complexity and power consumption of the RRU can be reduced.

In addition, the analog RoF system can support technologies such as subcarrier modulation, wavelength division multiplexing (Wavelength Division Multiplexing, WDM), and polarization multiplexing, to implement coexistence and co-transmission of signals (for example, a baseband digital signal, a long term evolution (Long Term Evolution, LTE) signal, a mobile telecommunications system (Universal Mobile Telecommunications System, UMTS) signal, a wireless network (Wi-Fi) signal, and a millimeter wave signal) at multi-frequency bands under multi-communication standards. This feature can further improve performance of a central access network (Cloud-Radio Access Network, C-RAN) in terms of compatibility, a quantity of access users, and a throughput. The RoF system that introduces a wavelength division multiplexing-passive optical network (wavelength division multiplexing-passive optical network, WDM-PON) structure may be referred to as a WDM-RoF system.

It should be understood that, in the A-RoF system, devices such as the EO/OE module, an optical fiber, an optical amplifier (optical power amplifier, OPA), and a PA in the RRU cause nonlinear distortion of a signal. However, the RRU is not provided with a unit having a processing function, such as an MCU, and naturally the nonlinear distortion of the signal cannot be processed. This further affects communication quality of the system. However, in the WDM-RoF system, in addition to nonlinearity of a single-wavelength signal, more nonlinear distortion such as intermodulation between optical waves and crosstalk of a plurality of channels of signals in an electrical domain and an optical domain also additionally exist. To improve the communication quality, linearization processing needs to be performed in both a single-wavelength A-RoF system and the WDM-RoF system.

Usually, linearization processing is to estimate a linear parameter based on a feedback signal sent by a receiving end to a transmitting end, and perform linear compensation based on an estimation result. The RRU needs to be provided with a feedback link, to transmit the feedback signal used for estimating the linear parameter. Certainly, a control link needs to be further provided, to perform linear compensation based on the estimation result. As described above, the RRU has an uplink. To reduce the power consumption, the uplink may be reused to transmit the feedback signal. In this way, only the control link needs to be added to the RRU to implement a function of activating the uplink and a downlink and/or switching between the uplink and a downlink.

In the WDM-RoF system, to simplify a hardware structure on an RRU side, this application uses an analog optical-related technology to implement a function of activating an uplink and a downlink and/or switching between the uplink and the downlink by the BBU side by controlling the RRU side.

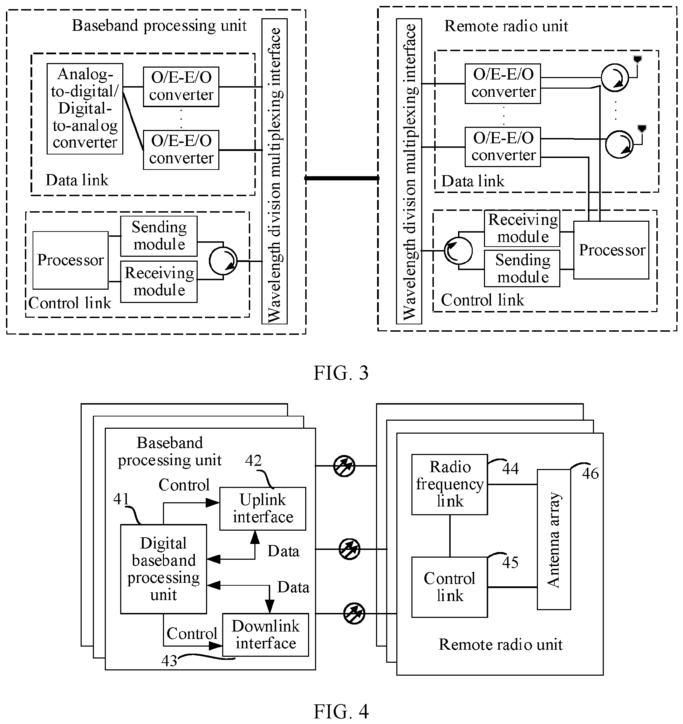

For example, FIG. 3 is a schematic diagram of an architecture of a WDM-RoF system. The system reserves a dedicated wavelength as a communication link (control link) that is for a control signal and that is used for activating and/or switching an uplink and a downlink. In other words, a wavelength corresponding to an optical fiber on the control link is different from a wavelength corresponding to an optical fiber on a data link. It should be understood that, like a data signal, the control signal is also a digital optical signal. Therefore, each of an RRU and a BBU needs to be provided with an EO/OE conversion module configured to perform electrical-to-optical conversion on the control signal, and ADC and DAC devices configured to perform an analog-to-digital conversion operation on the control signal. In addition, a processor is further included on a control link on each of the RRU and the BBU, and is configured to: identify a control signal, send the control signal by using a sending module, or receive the control signal by using a receiving module, to switch or activate the link based on the control signal. Because an EO/OE conversion module, an ADC/DAC module, and the like further need to be disposed on the control link of the RRU in the WDM-RoF system, a hardware structure is still complex. In addition, because active devices such as the EO/OE conversion module and the ADC/DAC module exist, power consumption is still high.

In addition, for a network structure of an indoor small cell, for example, for a plurality of ROUs that have functions similar to those of the RRU and that are deployed on a plurality of floors, a passive distributed unit (distributed unit, DSU) is used to implement switching and relay functions. To be specific, each DSU is connected to a group of ROUs, and a main hub unit (main hub unit, MHU) having functions of the BBU is connected to different DSUs through different optical fibers. A control unit is disposed between the MHU and the ROU, and is configured to control signal interaction. This solution also requires to configure a dedicated wavelength used to transmit the control signal. In addition, because the MHU communicates with the ROU according to a universal asynchronous receiver/transceiver (universal asynchronous receiver/transmitter, UART) protocol, the control signal herein is a digital signal. To identify the control signal, a digital optical communication interface needs to be additionally disposed on a ROU end, for example, the EO/OE conversion module, the ADC/DAC module, and another electrical device that may be used for demodulation need to be disposed. Similarly, hardware complexity is high, and power consumption is also high.

In view of this, embodiments of this application provide a RoF system and a nonlinear compensation method, to simplify hardware complexity of the RoF system, reduce power consumption, and improve a linearization effect of the RoF system.

The RoF system and the nonlinear compensation method provided in embodiments of this application are applicable to various communication systems, for example, a long term evolution (long term evolution, LTE) system, a 5th generation (5th generation, 5G) communication system (which may also be referred to as a new radio (new radio, NR) communication system), and a next generation communication system such as a 6G system. Certainly, the technical solutions in embodiments of this application are also applicable to another communication system, for example, a satellite communication system or an internet of vehicles communication system.

In this embodiment of this application, an advantage of the RoF system is that the RRU does not need to perform a digital processing operation. In this case, the RRU does not need to be provided with devices such as the ADC, the DAC, and a digital processing module that are configured to process the digital optical signal, to reduce hardware complexity and power consumption of the RRU. Therefore, for the RoF/WDM-RoF system, it may be designed that the RRU does not need to be provided with the digital processing module, to implement a function of switching between the uplink and the downlink. For the BBU, it may be designed that the control signal is not the digital optical signal. In this way, the BBU naturally does not need to perform transmission according to a digital optical communication protocol, and either does not need to be provided with devices such as the ADC, the DAC, and a digital processing module that are configured to process the digital optical signal, to reduce hardware complexity and power consumption of the BBU.

The following clearly and completely describes the technical solutions in embodiments of this application with reference to the accompanying drawings in embodiments of this application.

FIG. 4 is a schematic diagram of a structure of a RoF system according to an embodiment of this application. The RoF system includes a plurality of BBUs and a plurality of RRUs. Any BBU may be connected to one or more RRUs for communication.

Each BBU may be provided with a digital baseband processing unit 41, and an uplink interface 42 and a downlink interface 43 connected to the digital baseband processing unit 41. It should be understood that the digital baseband processing unit 41 may modulate downlink data to be sent to the RRU, and send the modulated downlink data to the RRU through the downlink interface 43. It should be noted that, in this embodiment of this application, a downlink signal sent by the BBU to the RRU may be downlink data or a control signal. The control signal may be a control signal used for switching between an uplink and a downlink, or may be a control signal sent by the BBU to the RRU and indicating the RRU to feed back a nonlinear distortion characteristic of the downlink of the BBU to the BBU. That is, the BBU may determine when to transmit an uplink signal or a downlink signal, in other words, may control switching between the uplink and the downlink by using the control signal. Further, the BBU may control, by using the control signal, the RRU to transmit uplink data or a feedback signal over the uplink, where the feedback signal may indicate the nonlinear distortion characteristic of the downlink of the BBU.

The BBU may also receive uplink data from the RRU through the uplink interface 42, and demodulate the uplink data from the RRU by using the digital baseband processing unit 41. Each RRU may be provided with a radio frequency link 44, a control link 45, and an antenna array 46. The radio frequency link 44 is connected to the uplink interface of the BBU, and is used to send an uplink signal to the BBU. The uplink signal may be uplink data or a feedback signal. In this embodiment of this application, the RRU may reuse the same uplink to send the uplink data and the feedback signal to the BBU, to reduce hardware complexity and power consumption of the RRU as much as possible. The RRU may control, by using the control link 45, the radio frequency link 44 to send the uplink data or the feedback signal. For example, the control link 45 is connected to the downlink interface 43 of the BBU, and is used to receive the downlink signal sent by the BBU through the downlink interface 43. The control link 45 may identify the received downlink signal. If the received downlink signal is used to control, for example, switching between the uplink and the downlink, the control link 45 may generate a control signal used to control the radio frequency link 44, to control enabling or disabling of the uplink or downlink of the RRU. If the received downlink signal is used to control, for example, the RRU to send the feedback signal, the control link 45 generates a control signal used to control the control link 45 to send the feedback signal.

In this embodiment of this application, the downlink interface 43 of the BBU may be designed based on a control interface of an analog optical correlator. In this way, the control signal generated by the BBU is not necessarily a digital optical signal, and naturally does not need to be transmitted according to a digital optical communication protocol, and devices such as an ADC, a DAC, and a digital processing module that are configured to process the digital optical signal do not need to be disposed, so that hardware complexity of the BBU is reduced, and power consumption of the BBU is also reduced. Because the control signal is not the digital optical signal, devices such as a digital processing module, an ADC, or a DAC that are configured to process the digital optical signal do not need to be disposed on the control link 45 of the RRU, so that hardware complexity and power consumption of the RRU can be reduced.

The downlink interface 43 is designed based on the control interface of the analog optical correlator, and is mainly implemented based on an optical signal analog correlation function. It should be understood that light has a dispersion characteristic, to be specific, optical signals of different wavelengths have different refractive indexes in a propagation medium. Even if the optical signals of different wavelengths pass through a same optical path, delays of different degrees occur. Usually, the dispersion characteristic of the light is used for pattern identification. For example, a frame header of an image frame may be determined and identified by using the dispersion characteristic of the light, to identify a target picture from a plurality of pictures. However, in this embodiment of this application, the optical signals are delayed by using the dispersion characteristic of the light, to generate a control signal used to control the RRU.

Because different wavelengths correspond to different frequencies, in this embodiment of this application, each optical wave may be used as a carrier, and a plurality of optical waves of different wavelengths are selected for combination. In other words, spectrum coding is implemented on the optical carrier. Because the optical wave has a fixed speed, a same time domain code may be modulated onto each carrier. In this way, a modulated optical wave signal is transmitted through a fiber of a distance, and a convolution (correlation) operation on the time domain code and the spectrum code, namely, a time-spectrum convolution operation, is implemented. For ease of understanding, the following describes the time-spectrum convolution operation according to a dispersion principle with reference to the accompanying drawings.

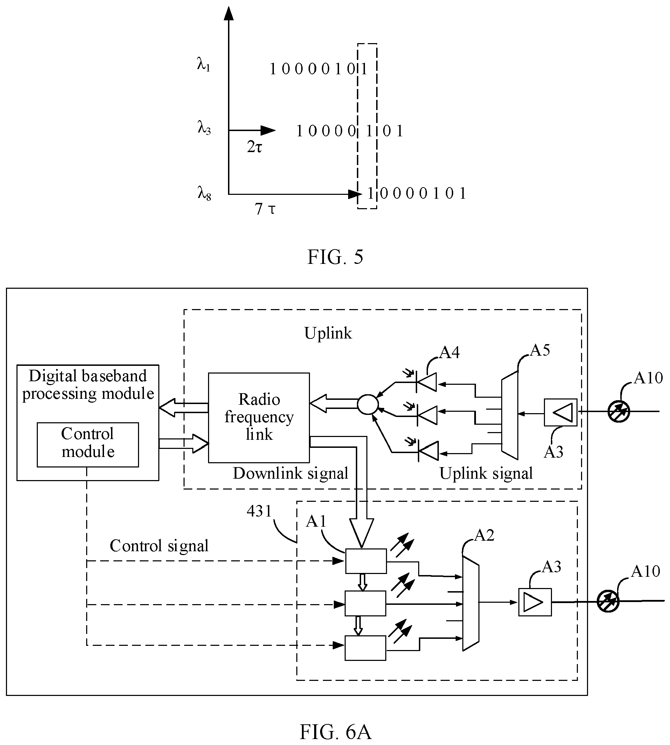

It is assumed that a system has three optical signals of different wavelengths, and the wavelengths of the three optical signals are respectively λ₁, λ₃, and λ₈, where λ₁<λ₃<λ₈, λ₃=λ₁+2Δλ, and λ₈=λ₃+5Δλ=λ₁+7Δλ. FIG. 5 is a schematic diagram of time-spectrum convolution according to a dispersion principle. It can be learned from FIG. 5 that the three optical signals each have a specific delay relative to each other in terms of time. For example, the optical signal of the wavelength of λ₃ is delayed by 2τ relative to the optical signal of the wavelength of λ₁, and the optical signal of the wavelength of λ₈ is delayed by 7τ relative to the optical signal of the wavelength of λ₃. It is assumed that a spectrum (wavelength) code of the optical signal of the wavelength of λ₁ is (1010000100000, 1-3-8). A reverse order of the spectrum code is referred to as a time domain code, namely, (0000010000101, 6-11-13). A same time domain code or different time domain codes may be modulated onto λ₁, λ₃, and λ₈. For example, different time codes, such as (0000010000101, 6-11-13) and (1100100000000, 1-2-5), are modulated through on-off keying (on-off keying, OOK). (0000010000101, 6-11-13) may be modulated onto λ₁ and λ₃, and (1100100000000, 1-2-5) may be modulated onto λ₈. After an optical signal obtained through modulation is transmitted through a long fiber, due to dispersion, an autocorrelation or cross-correlation operation is implemented, based on the time-spectrum convolution, on the optical signal received on a receiving side, as shown in FIG. 5.

The optical signal obtained through modulation includes a binary code that combines the spectral code and the time domain code. For ease of description, the optical signal including the binary code that combines the spectral code and the time domain code may be referred to as an optical correlation code. It should be understood that optical signals of different wavelengths correspond to different delays, and obtained optical correlation codes are also different. In this embodiment of this application, different optical correlation codes may be allocated to different RRUs, so that the BBU controls access to a plurality of RRUs. To enable the BBU to control more RRUs, a plurality of optical correlation codes may be synthesized, and the access to the RRUs is controlled by using a synthetic optical correlation code. For example, k optical waves of different wavelengths may be randomly selected from N available optical carriers in the system to perform spectrum coding, where N is an integer greater than or equal to 3, k is greater than or equal to 2, and k is less than or equal to N. In this way, there should be 2^{N}-2-N types of spectrum codes. Because the time domain code and the frequency domain code are arranged in a one-to-one reverse order, there are 2^{N}-2-N types of optical correlation codes. To be specific, one BBU may be connected to 2^{N}-2-N RRUs, in other words, the BBU may at most control access to 2^{N}-2-N RRUs.

The BBU may store a correspondence between the plurality of RRUs connected to the BBU and the synthetic optical correlation codes. Certainly, in an actual use process, the correspondence may be re-determined, and the re-determined correspondence is updated to the BBU. If the BBU controls a first RRU connected to the BBU, the downlink interface 43 of the BBU may generate, based on a correspondence between the RRU and a synthetic optical correlation code and optical signals of a plurality of wavelengths, a first synthetic optical correlation code corresponding to the first RRU. The control link 45 of the first RRU receives the first synthetic optical correlation code, and may identify the first synthetic optical correlation code, to determine whether the first synthetic optical correlation code is a synthetic correlation code corresponding to the first RRU. If determining that the first synthetic optical correlation code corresponds to the first RRU, the first RRU sends uplink data or a feedback signal to the BBU based on the first synthetic optical correlation code. If determining that the first synthetic optical correlation code does not belong to the first RRU, the first RRU may ignore the first synthetic optical correlation code.

The following describes possible implementations of modules in the BBU and modules in the RRU. Herein, reference numbers of devices in the accompanying drawings are first described uniformly.

A1: direct modulation laser module (laser) (direct modulation laser, DML), configured to modulate a plurality of radio frequency signals onto optical carriers of different wavelengths respectively.

A2: wavelength division multiplexing module (multiplexer), configured to converge optical signals of a plurality of wavelengths.

A3: optical power amplifier module (amplifier) (optical power amplifier, OPA).

A4: optical detection module (detector) (photo detector, PD), which converts an optical signal into an electrical signal.

A5: wavelength division demultiplexing module (demultiplexer), which distributes, in a one-to-one manner, a plurality of wavelength signals transmitted through one optical fiber to different ports for output.

A6: power amplifier module (amplifier) (power amplifier, PA).

A7: external modulation laser module (laser) (external modulation laser, EML), configured to modulate a plurality of radio frequency signals onto optical carriers of different wavelengths respectively.

A8: laser source, configured to generate optical carriers of different wavelengths.

A9: reflective semiconductor optical amplifier module (amplifier) (reflective semiconductor optical amplifier, RSOA), configured to amplify a seed light.

A10: optical fiber, where a length of the optical fiber in a local feedback link cannot exceed 10 m. A length of an optical fiber between a BBU and an RRU ranges from 5 km to 50 km.

A11: switch, which is used to disable or enable a link or some devices on the link.

A12: antenna.

A13: optical delay line group, where each included optical delay line is configured to delay a received signal.

FIG. 6A is a schematic diagram of a possible structure of a BBU. The BBU includes a digital baseband processing module, and an uplink and a downlink that are connected to the data baseband processing module. It should be understood that the uplink and the downlink each include a radio frequency link. For a specific implementation of the uplink of the BBU, refer to a structure in a current technology. Details are not described herein again. This document describes a specific implementation of the downlink of the BBU.

In this embodiment of this application, one BBU is connected to a plurality of RRUs. In addition to a signal processing function, the BBU further has an RRU management function. For example, the BBU may select to control access to one or more RRUs in the plurality of RRUs. Therefore, the BBU may further include a control module and a downlink interface 43 that are connected to each other. The control module may control the downlink interface 43, so that the downlink interface 43 generates a synthetic optical correlation code (referred to as a first synthetic optical correlation code hereinafter) corresponding to a first RRU, to control access to the first RRU. It should be noted that, the control module may be a module independent of the digital baseband processing module, or may be integrated into the digital baseband processing module, or the digital baseband processing module has a function of the control module.

It should be understood that, unless otherwise specified, the "connection" in this specification may include two cases: a direct connection and an indirect connection. For example, an output end of the control module may be directly connected to an input end of the downlink interface 43, or an output end of the control module may be indirectly connected to an input end of the downlink interface 43 through another linear element.

In a possible implementation, the downlink interface 43 may include a generation module 431 and a first interface module connected to the generation module 431. The generation module 431 may be configured to generate a first synthetic optical correlation code based on a plurality of wavelengths, and the interface module is configured to transmit the first synthetic optical correlation code to the first RRU. The first synthetic optical correlation code may indicate a working mode of the first RRU, and the working mode includes a transmission mode of a data signal or a transmission mode of a feedback signal.

In an example, the generation module 431 includes at least one DML and a first wavelength division multiplexing module connected to the at least one DML, and different direct modulation laser modules correspond to different wavelengths. Each DML is configured to modulate a received signal onto an optical carrier of a wavelength corresponding to the DML, and the first wavelength division multiplexing module is configured to combine optical signals obtained through modulation performed by the at least one direct modulation laser module, to obtain the synthetic optical correlation code.

The BBU may store a correspondence between the plurality of RRUs connected to the BBU and the synthetic optical correlation codes. The control module may adjust a bias voltage of the at least one DML by using a control signal (shown by a dashed line in the figure), or select, by controlling a switch, a plurality of DMLs to be used, to select optical carriers of different wavelengths. A time domain coding waveform in an OOK modulation manner is sent on each optical carrier, to obtain optical correlation codes respectively corresponding to a plurality of optical carriers of different wavelengths. Then, a plurality of optical correlation codes are output to the first wavelength division multiplexing module. The first wavelength division multiplexing module combines the plurality of optical correlation codes corresponding to different wavelengths, to generate a first synthetic optical correlation code, and perform signal transmission through one optical fiber. Certainly, the BBU may further include an optical amplifier, for example, an optical amplifier connected to the first wavelength division multiplexing module. The optical amplifier is configured to amplify a received optical signal.

It should be noted that, in this example, the synthetic optical correlation code and a downlink signal are transmitted through a same optical fiber. That is, the downlink may be reused for transmitting the synthetic optical correlation code. The first RRU receives a downlink signal transmitted through the downlink from the BBU, and may determine whether the downlink signal is a downlink data signal or a first synthetic optical correlation code. Because the first synthetic optical correlation code used to control access to the first RRU is not a digital optical signal, devices such as an ADC, a DAC, and a digital processing module that are configured to process the digital optical signal do not need to be additionally disposed in the BBU, so that hardware complexity and power consumption of the first communication apparatus can be reduced.

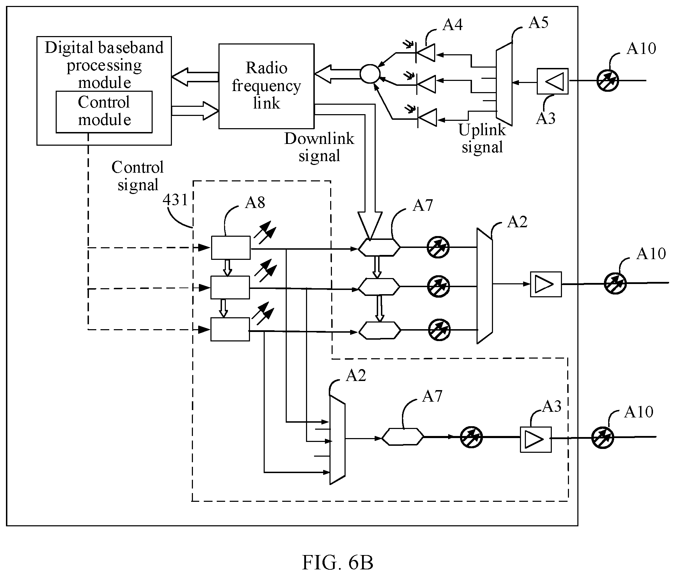

In another example, FIG. 6B is a schematic diagram of another possible structure of a BBU.

In this example, the generation module 431 may include a plurality of laser sources, a second wavelength division multiplexing module connected to the plurality of laser sources, and a modulation module connected to the second wavelength division multiplexing module. Each of the plurality of laser sources is configured to provide an optical carrier, and optical carriers generated by different laser sources have different wavelengths. The second wavelength division multiplexing module may combine optical carriers generated by the plurality of laser sources, and output a combined optical carrier to the modulation module. The modulation module is configured to modulate the combined optical carrier, to generate a first synthetic optical correlation code. In this case, relative to the laser source, the modulation module may be an external modulation module, namely, an EML.

Each laser source may be a tuned laser source, or may be a laser source with a fixed wavelength. If the laser source is the laser source with the fixed wavelength, the BBU may select a desired optical carrier combination by using a reconfigurable optical add/drop multiplexer (reconfigurable optical add/drop multiplexer, ROADM), perform frequency domain coding, and then output an optical signal to the EML. The EML modulates a time code corresponding to the optical carrier combination, to generate a first synthetic optical correlation code. In a possible implementation, after the WDM or the ROADM, a polarization state of the optical carrier combination may be controlled by using a polarization controller (polarization controller, PC).

A difference between this example and FIG. 6A lies in that optical carriers of a plurality of wavelengths may be first combined, and a plurality of combined optical carriers are then modulated, to generate a first synthetic optical correlation code. In this way, the plurality of laser sources configured to generate the optical carriers of the plurality of wavelengths correspond to one modulation module, that is, fewer modulation modules are disposed, to further reduce power consumption of the BBU.

In this example, the synthetic optical correlation code and a downlink signal may be transmitted through different optical fibers. To be specific, a separate optical fiber is configured for the generation module 431, and a separate optical fiber is configured for a link used to transmit a downlink data signal, as shown in FIG. 6B. Each laser source may be connected to the EML. A data signal of the BBU is output, over a radio frequency link, to a plurality of EMLs connected to the plurality of laser sources, and each of the plurality of EMLs modulates a received signal onto a corresponding optical carrier. The plurality of EMLs are connected to a third wavelength division multiplexer, and the third wavelength division multiplexer may combine input optical signals, amplify the optical signals by using an optical amplifier, and then output the amplified optical signals to the first RRU.

Based on a same concept, an embodiment of this application further provides a nonlinear compensation method. The method may be applied to a BBU, for example, the BBU shown in FIG. 6A or FIG. 6B, and the method includes:
generating a synthetic optical correlation code, and sending the synthetic optical correlation code to an RRU connected to the BBU, where the synthetic optical correlation code indicates a working mode of one of at least one RRU connected to the BBU, the working mode includes a transmission mode of a data signal or a transmission mode of a feedback signal, different RRUs correspond to different synthetic optical correlation codes, and the feedback signal indicates a nonlinear distortion characteristic of an optoelectronic element from the BBU to the RRU. For example, the foregoing generation module 431 may generate the synthetic optical correlation code. It should be noted that a specific implementation of generating the synthetic optical correlation code is not limited in this embodiment of this application.

Optionally, there are a plurality of manners of generating the synthetic optical correlation code. For example, to-be-sent signals may be modulated onto a plurality of optical carriers of different wavelengths, to obtain a plurality of optical signals obtained through modulation, and the plurality of optical signals obtained through modulation are then combined, to generate the synthetic optical correlation code. For another example, a plurality of optical carriers may be first generated, where different optical carriers have different wavelengths; the plurality of optical carriers are then combined; and the plurality of combined optical carriers are modulated, to generate the synthetic optical correlation code.

It should be understood that the method may further include: receiving a feedback signal from an RRU, and performing, based on the feedback signal, nonlinear compensation on the optoelectronic element on the transmission link from the BBU to the RRU.

The foregoing describes the possible structure of the BBU and the nonlinear compensation method that can be implemented based on the BBU. The following describes a possible structure of an RRU (using a first RRU connected to the BBU as an example) and a nonlinear compensation method that can be implemented based on the first RRU.

The RRU is provided with a radio frequency link 44, a control link 45, and an antenna array. The radio frequency link 44 is connected to an uplink interface of the BBU, and is configured to send an uplink signal, for example, an uplink data signal or a feedback signal, to the BBU. The control link 45 is connected to the radio frequency link 44, and the control link 45 is connected to a downlink interface 43 of the BBU, and is configured to: receive a downlink data signal or a first synthetic optical correlation code sent by the BBU through the downlink interface 43, and generate, based on the received downlink data signal or first synthetic optical correlation code, a control signal used to control the radio frequency link 44, to control the radio frequency link 44 to transmit the uplink data signal or the feedback signal to the BBU. The radio frequency link 44 may include a wavelength division multiplexing module connected to the uplink interface of the BBU, and a plurality of DMLs connected to the wavelength division multiplexing module. The plurality of DMLs are configured to: receive signals from the control link 45, modulate the received signals onto corresponding optical carriers, combine, by using the wavelength division multiplexing module, the optical carriers obtained through modulation, and transmit the optical carriers obtained through modulation to the uplink interface of the BBU. The radio frequency link 44 may be used by the first RRU to transmit the uplink data signal or the feedback signal to the BBU, that is, a same communication link may be reused for the data signal or the feedback signal. Therefore, in comparison with a communication link individually deployed for transmitting the feedback signal, hardware complexity and power consumption of the first RRU can be reduced.

The control link 45 is connected to the downlink interface 43 of the BBU, may identify the first synthetic optical correlation code sent through the downlink interface 43, and may generate the control signal based on the first synthetic optical correlation code. Because the first synthetic optical correlation code is not a digital optical signal, devices such as a digital processing module, an ADC, or a DAC that are configured to process the digital optical signal do not need to be disposed on the control link 45, so that hardware complexity of the first RRU is simplified, and power consumption of the first RRU is reduced.

For example, if the first synthetic optical correlation code is received on the control link 45, optical signals of a plurality of wavelengths corresponding to the first synthetic optical correlation code may be delayed, and a control signal is generated based on the delayed optical signals, where different wavelengths correspond to different delay time. To be specific, the optical signals may be delayed based on an optical scattering characteristic, to implement a passive optical switching function and avoid an operation of optical-to-electrical conversion and electrical-to-optical conversion. In other words, devices are disposed as fewer as possible, and even active devices such as optical-to-electrical/electrical-to-optical conversion modules are not disposed, to reduce power consumption as much as possible.

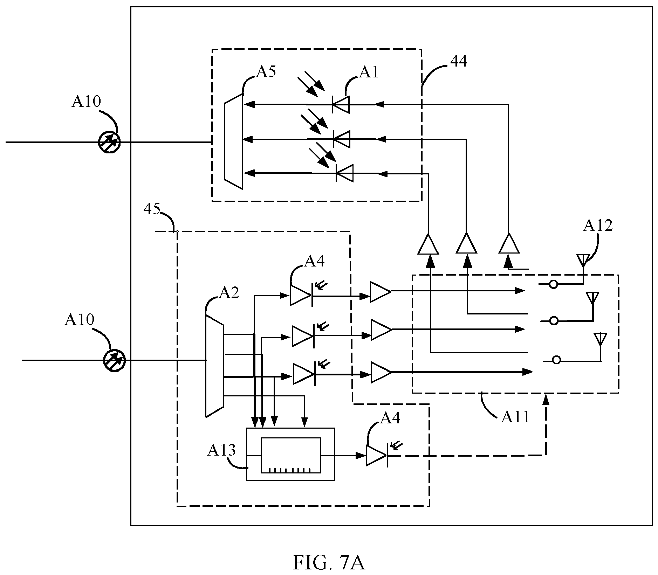

In an example, FIG. 7A is a schematic diagram of a structure of an RRU.

In this example, the control link 45 includes a receiving module and a generation module connected to the receiving module. The receiving module may be an optical fiber connected to a downlink interface 43 of a BBU, and is configured to receive a first synthetic optical correlation code or a downlink data signal from the BBU. The generation module may generate a control signal based on a received signal, to control a first RRU to transmit an uplink data signal or a feedback signal to the BBU.

For example, the generation module may include a demultiplexing module, an optical delay line group connected to the demultiplexing module, and a first optical detection module connected to the optical delay line group. The demultiplexing module is connected to the downlink interface 43 of the BBU, and is configured to decompose the first synthetic optical correlation code, to obtain optical signals corresponding to wavelengths. The demultiplexing module may then divide, by using an optical splitter, the optical signals obtained through decomposition into two beams. One beam is input into a plurality of optical detectors, and is converted into downlink data signals, and the other beam is input into the optical delay line group. Optical delay lines in the optical delay line group are configured to: delay the optical signals of the corresponding wavelengths, and output the delayed optical signals, where different optical delay lines correspond to different delay time. The optical delay line group then outputs the delayed optical signals to the first optical detection module, and the first optical detection module generates a control signal based on the delayed optical signals. In this example, the optical delay line group delays the optical signals based on an optical scattering characteristic, and an active processing device such as an ADC/DAC is not disposed, to reduce power consumption of the first RRU.

The control signal output by the first optical detection module may control turn-on or turn-off of each switch in a switch group connected to a radio frequency link 44, to control enabling or disabling of the radio frequency link 44. Further, when there is no requirement for transmitting the uplink data signal or the feedback signal, some devices on the radio frequency link 44 may be further controlled to be in a sleep state, to reduce power consumption of the first RRU.

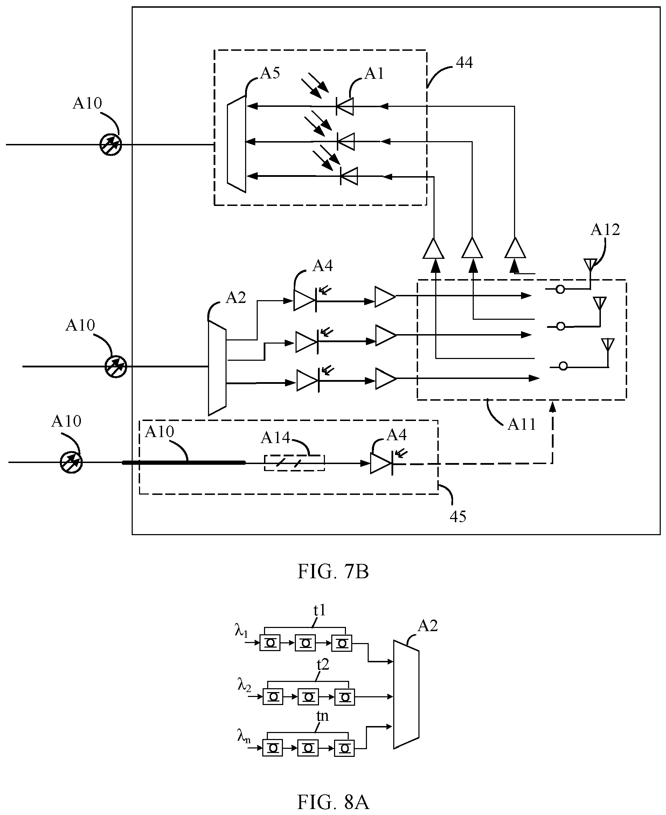

FIG. 7B is a schematic diagram of another structure of an RRU.

In this example, a control link 45 includes a generation module and an interface module, where the interface module may be an optical fiber. The generation module may include a first optical fiber connected to a BBU and a second optical detection module connected to the first optical fiber. The first optical fiber is configured to transmit a first synthetic optical correlation code to delay optical signals. The second optical detection module may generate a control signal based on the optical signals from the first optical fiber, in other words, perform optical-to-electrical conversion on the optical signals transmitted through the first optical fiber, to obtain the control signal.

It should be understood that delay time of optical fibers of different lengths on an optical signal are different. Therefore, first optical fibers of different lengths may be configured for a plurality of RRUs connected to the BBU. A difference from FIG. 7A lies in that, in this example, an optical-related operation is implemented by using dispersion effects of the optical fibers of different lengths, so that hardware complexity and power consumption of the first RRU can be further reduced.

In this example, the generation module may further include a second optical fiber, where one end of the second optical fiber is connected to the first optical fiber, and the other end of the second optical fiber is connected to the second optical detection module. The second optical fiber may be a highly nonlinear fiber. In this example, the optical-related operation is implemented through two optical fibers. To be specific, the second optical fiber is followed by the first optical fiber, and the second optical fiber is the highly nonlinear fiber. An optical dispersion effect of the generation module may be improved through the second optical fiber, to implement the controllable optical-related operation.

It should be noted that the radio frequency link 44 in FIG. 7A and the radio frequency link 44 in FIG. 7B each include at least one direct modulation laser module and a wavelength division multiplexer connected to the at least one direct modulation laser module. In this way, the first RRU transmits a data signal or a feedback signal by using the at least one direct modulation laser module. Whether the at least one direct modulation laser module works may be controlled by using the control signal generated by the generation module. When the first RRU does not need to transmit the data signal or the feedback signal to the BBU, the at least one direct modulation laser module may be controlled to be in a sleep state, to reduce power consumption of the first RRU.

A specific implementation of the optical delay line group in FIG. 7A is not limited in this embodiment of this application. The following provides two implementations of two optical delay line groups.

FIG. 8A is a schematic diagram of a structure of an optical delay line group.

In this example, the optical delay line group is implemented based on an architecture of cascaded microrings. To be specific, each optical delay line in the optical delay line group uses a plurality of microrings for cascading, and one wavelength corresponds to one optical delay line. By adjusting a temperature of a heater on the microrings on each optical delay line, delay control of the optical delay line can be implemented.

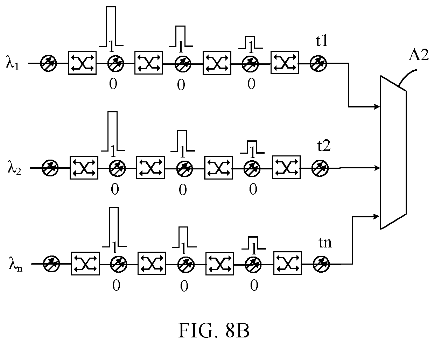

FIG. 8B is a schematic diagram of another structure of an optical delay line group.

In this example, the optical delay line group is implemented based on an architecture of cascaded optical switches. To be specific, each optical delay line in the optical delay line group includes a plurality of optical switches and fibers of different lengths. The optical switch (optical switch, O-SW) may be in a mechanical form, or may be in an electronic control form or another form. By adjusting a turn-on or turn-off state of the plurality of optical switches on each optical delay line, an optical path difference exists between optical signals of different wavelengths, to control delay time of the optical signals of a plurality of wavelengths.

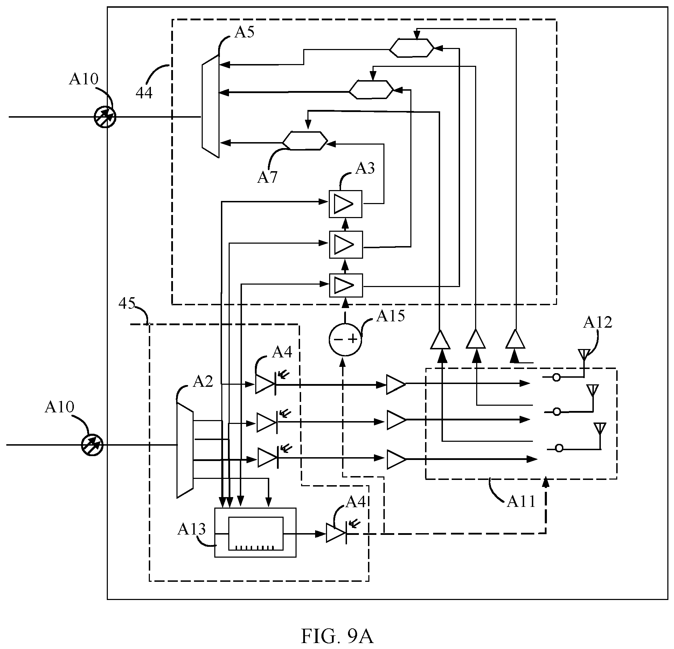

Different from the structure of the radio frequency link 44 in FIG. 7A and the structure of the radio frequency link 44 in FIG. 7B, an embodiment of this application further provides a structure of a radio frequency link 44. FIG. 9A is a schematic diagram of another structure of an RRU.

In this example, different from FIG. 7A and FIG. 7B, the radio frequency link 44 may use a wavelength reuse technology. For example, the radio frequency link 44 includes a plurality of semiconductor optical amplifiers and a plurality of modulation modules connected to the plurality of semiconductor optical amplifiers in a one-to-one correspondence. Each channel of signals decomposed by a demultiplexing module on the control link 45 may be correspondingly transmitted to each semiconductor optical amplifier. Each of the semiconductor optical amplifiers may remove modulation information of a received downlink modulation signal, and output the downlink modulation signal from which the modulation information is removed. Each of the modulation modules modulates a received data signal or feedback signal into an optical signal, and sends the optical signal obtained through modulation to a BBU. In this example, enabling and disabling of the semiconductor optical amplifier may be controlled by adjusting a bias current of the semiconductor optical amplifier, so that the radio frequency link 44 transmits the data signal or the feedback signal by using the plurality of semiconductor optical amplifiers and the plurality of modulation modules. Compared with the semiconductor optical amplifier, the modulation module herein is an EML, and has lower power consumption than a DML.

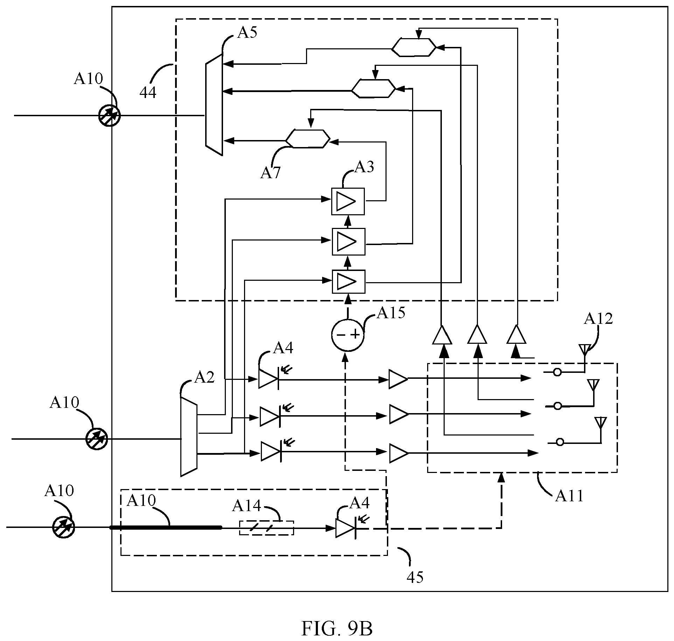

FIG. 9B is a schematic diagram of another structure of an RRU.

In this example, a control link 45 of an RRU uses the structure shown in FIG. 7B, and a radio frequency link 44 uses the structure shown in FIG. 8A. For details, refer to related descriptions in FIG. 7B and FIG. 8A. Details are not described herein again. In this example, there is no optical delay line group on the control link 45, and the radio frequency link 44 uses a wavelength reuse technology, and may use an EML, so that a DML is not disposed, and power consumption of the RRU can be further reduced.

Based on a same inventive concept, an embodiment of this application further provides a nonlinear compensation method. The method may be applied to the RRU shown in FIG. 7A, FIG. 7B, FIG. 9A, or FIG. 9B, and the method includes:
receiving a synthetic optical correlation code from a BBU, and generating a control signal based on the synthetic optical correlation code, where the synthetic optical correlation code is generated based on a plurality of different wavelengths, the control signal is used to control a transmission link from the RRU to the BBU to transmit a data signal or a feedback signal, and the feedback signal indicates a nonlinear distortion characteristic of an optoelectronic element on the transmission link from the BBU to the RRU.

Optionally, the generating a control signal based on the synthetic optical correlation code may be implemented in a plurality of manners. For example, optical signals of a plurality of wavelengths corresponding to the synthetic optical correlation code may be delayed, and the control signal is generated based on the delayed optical signals, where different wavelengths correspond to different delay time.

For example, the synthetic optical correlation code may be decomposed to obtain optical signals corresponding to the plurality of wavelengths, a plurality of obtained optical signals are then delayed, the delayed optical signals are output, and the control signal is generated based on the delayed optical signals, where different optical signals correspond to different delay time.

For example, the synthetic optical correlation code may be transmitted through a first optical fiber connected to the BBU, and the control signal is generated based on optical signals from the first optical fiber, where optical fibers used by different RRUs connected to the BBU have different lengths.

For example, the synthetic optical correlation code may be transmitted through a first optical fiber and a second optical fiber that are connected to the BBU, and the control signal is generated based on optical signals transmitted through the second optical fiber, where the first optical fiber and the second optical fiber used by different RRUs connected to the BBU have different total lengths, and the second optical fiber is a high nonlinear optical fiber.

Optionally, the method further includes: sending the feedback signal to the BBU based on the control signal.

In this embodiment of this application, implementations of the BBU and implementations of the RRU may be combined with each other to achieve different technical effects. The following uses several specific examples for description.

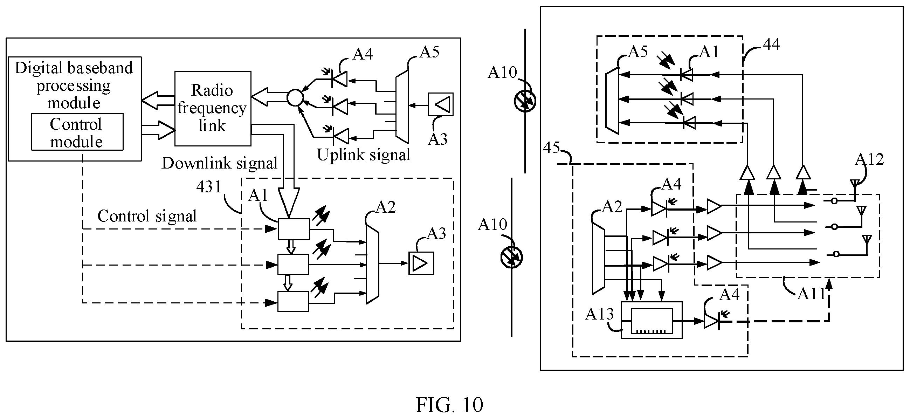

FIG. 10 is a schematic diagram of a structure of a RoF system.

The RoF system in this example may include one BBU and one or more RRUs connected to the BBU. The RRU may use the structure shown in FIG. 6A or the structure shown in FIG. 7A. An output end of a downlink interface 43 of the BBU is connected to an input end of a control link 45 of the RRU. In the system, because a signal used by the BBU to control the RRU is a synthetic optical correlation code, and the synthetic optical correlation code is not a digital optical signal, active devices such as a digital processing module, an ADC, and a DAC that are configured to process the digital optical signal do not need to be disposed on a BBU side, so that hardware complexity of the BBU can be simplified, and power consumption of the BBU is reduced. The RRU needs to identify the synthetic optical correlation code from the BBU. Similarly, because the synthetic optical correlation code is not the digital optical signal, active devices such as a digital processing module, an ADC, and a DAC that are configured to process the digital optical signal do not need to be disposed on a BBU side, so that hardware complexity of the BBU can be simplified, and power consumption of the BBU is reduced.

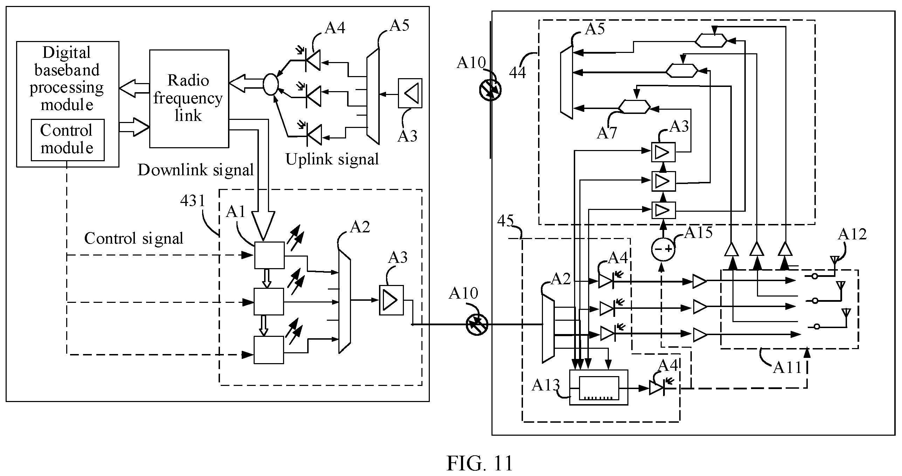

FIG. 11 is a schematic diagram of another structure of a RoF system.

The RoF system in this example may include one BBU and one or more RRUs connected to the BBU. The RRU may use the structure shown in FIG. 6A or the structure shown in FIG. 9A. A difference between the structure shown in FIG. 11 and the structure shown in FIG. 10 lies in that a radio frequency link 44 of the RRU uses the structure shown in FIG. 9A. To be specific, the radio frequency link 44 transmits a data signal or a feedback signal by using a plurality of semiconductor optical amplifiers and a plurality of modulation modules. The modulation module on the radio frequency link 44 herein may be an EML, and has lower power consumption than a DML. Therefore, power consumption of the RRU can be further reduced.

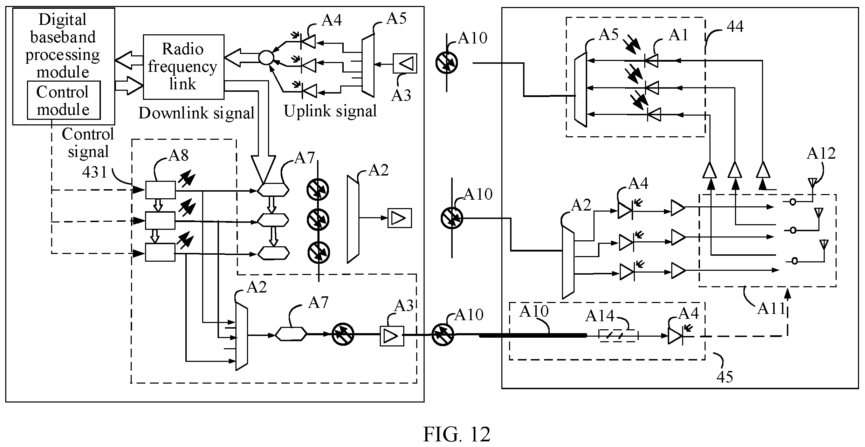

FIG. 12 is a schematic diagram of another structure of a RoF system.

The RoF system in this example may include one BBU and one or more RRUs connected to the BBU. The RRU may use the structure shown in FIG. 6B or the structure shown in FIG. 7B. A difference between the structure shown in FIG. 12 and the structure shown in FIG. 10 lies in that, through a downlink interface 43 of the BBU, over a transmission link used to transmit a synthetic optical correlation code, optical carriers of a plurality of wavelengths may be first combined, and a plurality of combined optical carriers are then modulated. In this way, a plurality of laser sources configured to generate the optical carriers of the plurality of wavelengths correspond to one modulation module, that is, fewer modulation modules are disposed, to further reduce power consumption of the BBU. The RRU implements an optical-related operation by using a dispersion effect of an optical fiber, to further reduce hardware complexity and power consumption of the RRU.

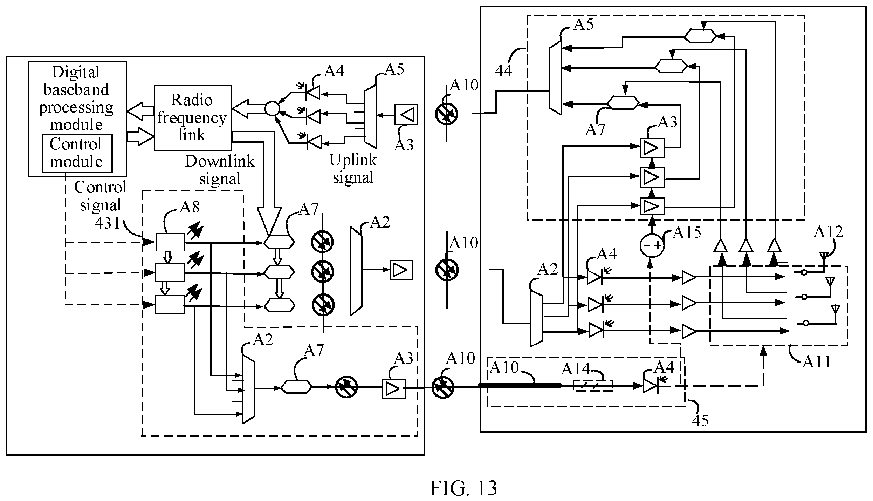

FIG. 13 is a schematic diagram of another structure of a RoF system.

The RoF system in this example may include one BBU and one or more RRUs connected to the BBU. The RRU may use the structure shown in FIG. 6B or the structure shown in FIG. 9B. A difference between the structure shown in FIG. 13 and the structure shown in FIG. 12 lies in that, through a downlink interface 43 of the BBU, over a transmission link used to transmit a synthetic optical correlation code, optical carriers of a plurality of wavelengths may be first combined, and a plurality of combined optical carriers are then modulated. In this way, a plurality of laser sources configured to generate the optical carriers of the plurality of wavelengths correspond to one modulation module, that is, fewer modulation modules are disposed, to further reduce power consumption of the BBU. A radio frequency link 44 of the RRU uses the structure shown in FIG. 9A. To be specific, the radio frequency link 44 transmits a data signal or a feedback signal by using a plurality of semiconductor optical amplifiers and a plurality of modulation modules. The modulation module on the radio frequency link 44 herein may be an EML, and has lower power consumption than a DML. Therefore, power consumption of the RRU can be further reduced.

It should be noted that FIG. 11 to FIG. 13 are merely examples. It should be understood that the BBU in the RoF system may use the structure in FIG. 6A or FIG. 6B, and the RRU may use any one of the structures in FIG. 7A, FIG. 7B, FIG. 9A, and FIG. 9B. Details are not described herein again.

The foregoing describes a specific implementation of each module in the RoF system. The following describes an overall procedure in which the BBU and the RRU in the RoF system separately process a downlink signal and an uplink signal.

In this embodiment of this application, the BBU determines whether to send downlink data to the RRU and receive uplink data or a feedback signal from the RRU. In a possible implementation, a quantity of times or duration for which the synthetic optical correlation code appears within a time period is used to represent different control signals, in other words, different working modes of the RRU, for example, a working mode in which the RRU transmits an uplink data signal and a working mode in which the RRU transmits a feedback signal.

In an example, an occasion of switching between an uplink and a downlink may be determined based on duration of a slot occupied for sending downlink data (which may be referred to as a downlink slot in this specification), duration of a slot occupied for receiving uplink data (which may be referred to as an uplink slot in this specification), or duration of a slot occupied for receiving a feedback signal (which may be referred to as a feedback slot in this specification). For example, the downlink is automatically switched to after the uplink slot or the feedback slot ends, a downlink data signal is transmitted through the downlink, and the uplink is automatically switched to after the downlink slot ends, to receive the uplink data signal or the feedback signal from the RRU.

In this embodiment of this application, the BBU indicates, by using the synthetic optical correlation code, the RRU to send the uplink data or the feedback signal to the BBU. To distinguish between the uplink slot and the feedback slot, in a possible implementation, the uplink slot or the feedback slot may be indicated by using a quantity of synthetic optical correlation codes. A quantity of synthetic optical correlation codes corresponding to the uplink slot is different from a quantity of synthetic optical correlation codes corresponding to the feedback slot.

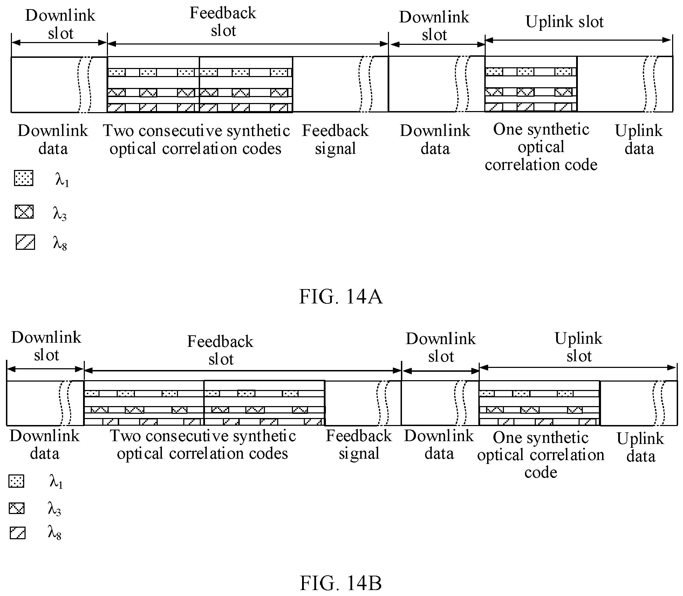

FIG. 14A is a schematic diagram of a working slot of a BBU. FIG. 14A shows that two consecutive same synthetic optical correlation codes indicate a start of a feedback slot, or otherwise, indicate a start of an uplink slot. After the feedback slot, in other words, sending of the two consecutive same synthetic optical correlation codes ends, a downlink is switched to. After the two consecutive synthetic optical correlation codes in the feedback slot end, the BBU may receive a feedback signal from an RRU. After the uplink slot is switched to when the downlink slot ends, for example, the BBU sends a synthetic optical correlation code, the BBU no longer sends a downlink data signal, but the uplink is switched to, to receive uplink data or the feedback signal from the RRU. It should be noted that herein, the downlink slot, the uplink slot, and the feedback slot are distinguished from each other by merely using a quantity of synthetic optical correlation codes. A manner of distinguishing between the downlink slot, the uplink slot, and the feedback slot is not limited in this embodiment of this application. For example, the downlink slot, the uplink slot, and the feedback slot may be distinguished from each other by using duration of the synthetic optical correlation code within preset duration.

FIG. 14B is a schematic diagram of a working slot of an RRU. Corresponding to FIG. 14A, the working slot of the RRU in FIG. 14B also uses two consecutive same synthetic optical correlation codes to indicate a start of a feedback slot, or otherwise, to indicate a start of an uplink slot. After the feedback slot, in other words, a BBU sends two consecutive same synthetic optical correlation codes, the RRU receives the two consecutive same synthetic optical correlation codes, and delays the optical correlation codes corresponding to wavelengths of the received synthetic optical correlation codes, to generate a control signal, to control the RRU to send a feedback signal to the BBU in the feedback slot. After the uplink slot, for example, the BBU sends a synthetic optical correlation code, the BBU no longer sends a downlink data signal, but an uplink is switched to. The RRU receives the synthetic optical correlation code, and delays the synthetic optical correlation code, to generate a control signal, to control the RRU to send uplink data to the BBU.

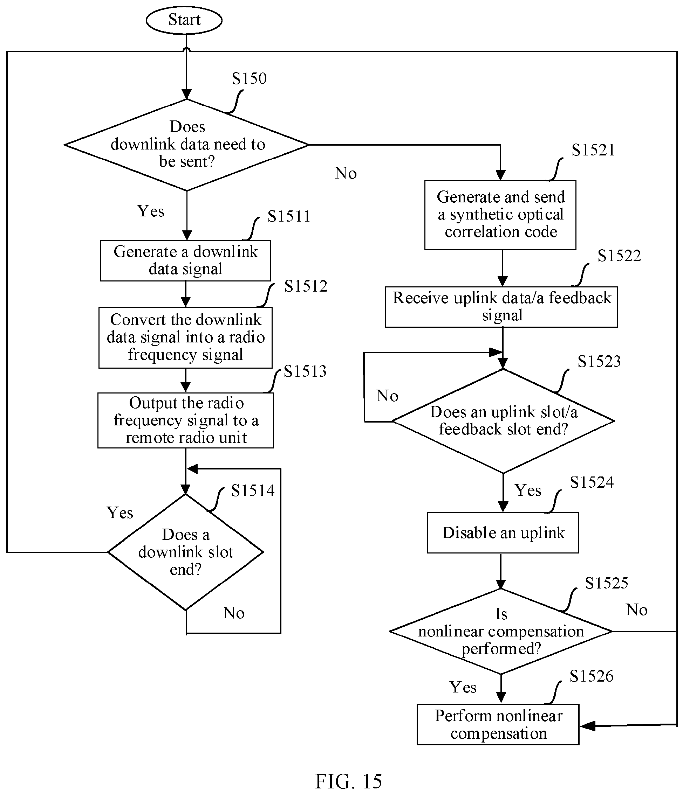

FIG. 15 shows an overall procedure in which a BBU processes a downlink signal and an uplink signal. An overall procedure in which the BBU processes the downlink signal includes S150 to S1514, and an overall procedure in which the BBU processes the uplink signal includes S150 to S1526. In FIG. 15, the working slots designed in FIG. 14A and FIG. 14B are used as an example.

S150: Determine whether to send downlink data, and if the downlink data needs to be sent, perform S1511; or if an uplink signal needs to be received, perform S1521.

It should be understood that the BBU may send a downlink signal to an RRU, or may receive an uplink signal from the RRU. To reduce power consumption of the BBU, when the BBU does not need to receive the uplink signal, an uplink or some devices on the uplink may be disabled. Similarly, when the BBU does not need to send the downlink signal, a downlink or some devices on the downlink may also be disabled.

Therefore, after being started, the BBU may determine whether a downlink data signal needs to be sent to the RRU, or whether the uplink signal needs to be received from the RRU. If the BBU needs to send the downlink data signal to the RRU, the BBU sequentially performs S1511 to S1514. If the BBU needs to receive the uplink signal from the RRU, the BBU may sequentially perform S1521 to S1526.

S1511: Process the downlink data, to generate a downlink data signal.

After being started, the BBU may send the downlink data signal to the RRU, or may receive the uplink signal from the RRU. To reduce the power consumption of the BBU, when the BBU does not need to receive the uplink signal, the uplink may be disabled. Similarly, to reduce power consumption of the RRU, when the RRU does not need to send the uplink signal to the BBU, the uplink may be disabled.

Therefore, after the BBU is started, a digital baseband processing unit in the BBU may determine, according to a protocol specification, whether to send downlink data. If the downlink data needs to be sent, the BBU may perform a signal processing operation such as coding, modulation, precoding, or predistortion on the downlink data to be sent, to generate a downlink signal.

S1512: Convert the downlink data signal into a radio frequency signal.

After generating the downlink data signal, the BBU may output the downlink data signal to a radio frequency link in the BBU, to perform operations such as digital-to-analog conversion, frequency mixing, filtering, and amplification on the downlink data signal, to obtain the radio frequency signal.

S1513: Output the radio frequency signal to the RRU.

After converting the downlink data signal into the radio frequency signal, the BBU may output the radio frequency signal to the RRU. The radio frequency signal is output to a downlink interface 43, is modulated by a DML in the downlink interface 43 shown in FIG. 6A or an EML in the downlink interface 43 shown in FIG. 6B, and is then output to the RRU through a wavelength division multiplexing module and an optical fiber.

S1514: Determine whether a downlink slot ends.

In this embodiment of this application, to implement relatively timely switching between the uplink and the downlink, the BBU is further provided with a timer. When the BBU outputs the radio frequency signal, the timer may be started to determine whether transmission of the downlink data signal is completed, in other words, whether the downlink slot ends. If the downlink slot ends, the uplink may be enabled, or otherwise, the uplink is disabled.

After the downlink slot ends, the BBU may determine again whether an uplink data signal or a feedback signal needs to be received. If the BBU needs to receive the uplink data signal or the feedback signal, the BBU may perform S1521 to S1526.

S1521: Generate and send a synthetic optical correlation code.

After receiving the uplink data signal or the feedback signal, the BBU may generate the synthetic optical correlation code corresponding to a to-be-controlled RRU, and send the synthetic optical correlation code to the RRU through the downlink interface 43. The RRU receives the synthetic optical correlation code, and generates a control signal based on the synthetic optical correlation code, to control enabling of an uplink of the RRU.

S1522: Receive the uplink data or the feedback signal.

After sending the synthetic optical correlation code, the BBU may receive the uplink data signal or the feedback signal from the RRU over the uplink. After receiving the uplink data signal or the feedback signal, the BBU performs a signal processing operation such as down frequency conversion, filtering, amplification, demodulation, or decoding information extraction on the received uplink data signal or the feedback signal, and stores or forwards the data obtained through demodulation.

S1523: Determine whether an uplink slot or a feedback slot ends.

S1524: If the uplink slot or the feedback slot ends, disable the uplink or a feedback link.

After receiving the uplink data signal or the feedback signal, the BBU may determine whether the uplink slot or the feedback slot ends, to disable the uplink when the uplink slot ends, and to disable the feedback receiving link when the feedback slot ends, so that the power consumption of the BBU is reduced as much as possible.

S1525: Determine whether to perform nonlinear compensation.

S1526: Perform nonlinear compensation.

After receiving the feedback signal, the BBU may determine whether to perform nonlinear compensation. If nonlinear compensation needs to be performed, the BBU may estimate a non-linear parameter based on the feedback signal, and perform nonlinear compensation based on an estimation result.

It should be understood that, after receiving the uplink signal or the feedback signal, the BBU determines that the uplink slot or the feedback signal ends, and may determine again whether the downlink data signal needs to be sent or the uplink data signal or the feedback signal needs to be received.

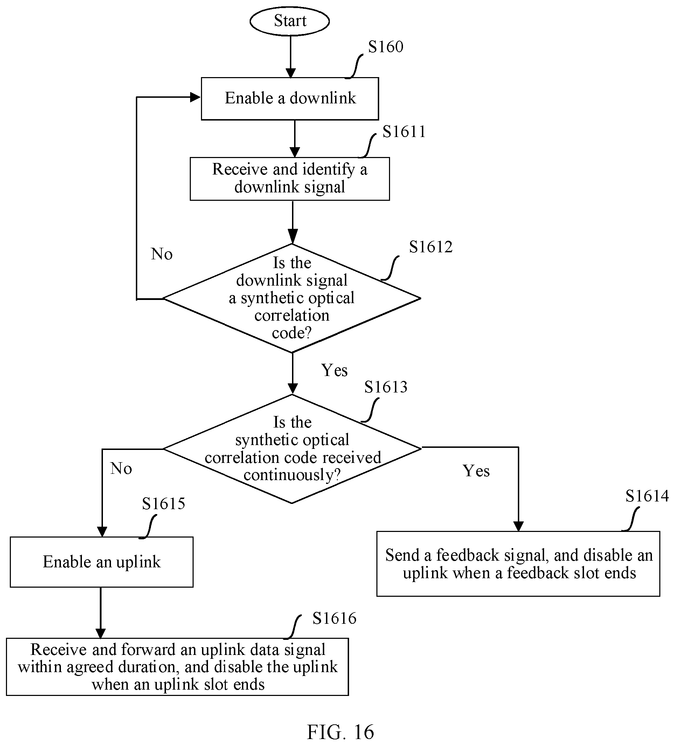

FIG. 16 shows an overall procedure in which an RRU processes a downlink signal and an uplink signal, including the following steps.

S160: Enable a downlink.

When the RRU is started, the downlink is enabled. For example, all or some devices such as an OE, an antenna array, a PA, and a phase shifter (which may be a true delay line based on a microwave photonic technology, or an analog electrical phase shifter) included on the downlink may be enabled.

S1611: Receive and identify the downlink signal.

The RRU may receive and identify the downlink signal over the control link in FIG. 7A and FIG. 7B. For details, refer to the foregoing related descriptions. Details are not described herein again.

S1612: Determine whether the downlink signal is a synthetic optical correlation code.

After receiving the downlink signal over the downlink, the RRU identifies the downlink signal, and if it is determined that the downlink signal is the synthetic optical correlation code, a timer is started. Then, enabling of an uplink or a feedback link is determined based on a quantity of synthetic optical correlation codes appearing within preset duration. The feedback link herein is a link used to send a feedback signal, and may be reused with the uplink. For example, enabling the feedback link may be enabling some devices on the uplink.

S1613: Determine whether the synthetic optical correlation code is received continuously, and if the synthetic optical correlation code is received continuously, perform S1614; or otherwise, perform S1615 and S1616.

It should be understood that a BBU may control the RRU to send uplink data or a feedback signal. After determining that the downlink signal from the BBU is the synthetic optical correlation code, the RRU may determine whether the synthetic optical correlation code is continuously received, to determine whether to send the uplink data or the feedback signal to the BBU.

S1614: Send the feedback signal, and disable the uplink when a feedback slot ends.

When determining to send the feedback signal, the RRU may obtain near-field feedback information by using a coupling circuit at the antenna array, or receive far-field feedback information by using the antenna array, convert the near-field feedback information or the far-field feedback information into a feedback signal, and send the feedback signal to the BBU over the uplink. When the feedback slot ends, the RRU may disable the uplink, to reduce power consumption of the RRU.

S1615: Enable the uplink.

S1616: Receive and forward an uplink data signal within agreed duration, and disable the uplink when an uplink slot ends.

When the RRU needs to send the uplink data signal, the RRU may receive uplink information from a terminal within the agreed duration, convert the uplink information into an uplink data signal, and send the uplink data signal to the BBU over the uplink. When the uplink slot ends, the RRU may disable the uplink, to reduce the power consumption of the RRU. Certainly, the RRU may also wait for the BBU to send the synthetic optical correlation code again, to determine whether the uplink slot ends, to disable the uplink.

In this embodiment of this application, because the synthetic optical correlation code is generated based on a plurality of wavelengths, and is not a digital optical signal, the BBU controls, based on the synthetic optical correlation code, access to the RRU connected to the BBU, naturally does not need to perform transmission according to a digital optical communication protocol, and either does not need to be provided with devices such as an ADC, a DAC, and a digital processing module that are configured to process the digital optical signal, to reduce hardware complexity and power consumption of the BBU. In addition, different combinations of the plurality of wavelengths may generate different optical synthesis codes. Therefore, one BBU may control access to a plurality of RRUs. Similarly, the RRU either does not need to be provided with devices such as an ADC, a DAC, and a digital processing module that are configured to process a digital optical signal, to reduce hardware complexity and power consumption of the RRU.

Based on a same technical conception, an embodiment of this application further provides a computer-readable storage medium. The computer-readable storage medium stores a computer program, the computer program includes program instructions, and when the program instructions are executed by a computer, the computer is enabled to perform the nonlinear compensation method provided in the foregoing embodiments, for example, the overall procedure in which the BBU processes the uplink signal or the downlink signal shown in FIG. 15, or the overall procedure in which the RRU processes the uplink signal or the downlink signal shown in FIG. 16.

Based on a same technical concept, an embodiment of this application further provides a computer program product. The computer program product includes computer program code. When the computer program code is run on a computer, the computer is enabled to perform the nonlinear compensation method provided in the foregoing embodiments, for example, the overall procedure in which the BBU processes the uplink signal or the downlink signal shown in FIG. 15, or the overall procedure in which the RRU processes the uplink signal or the downlink signal shown in FIG. 16.

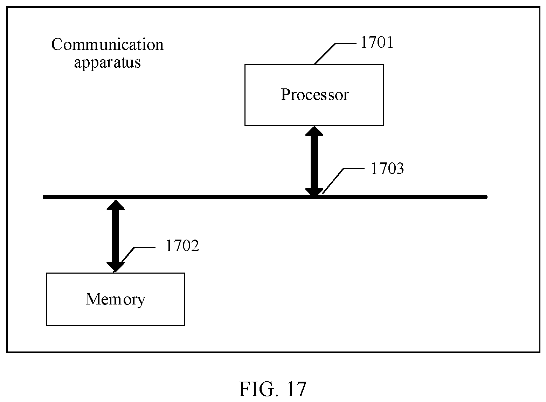

Based on a same technical concept, with reference to FIG. 17, an embodiment of this application further provides a communication apparatus, including at least one processor 1701; and a memory 1702 communicatively connected to the at least one processor. The memory 1702 stores instructions executable by the at least one processor 1701, and the at least one processor 1701 executes the instructions stored in the memory 1702, so that the overall procedure in which the BBU or the RRU processes the downlink signal or the uplink signal according to the foregoing embodiments is executed.

The processor 1701 and the memory 1702 may be coupled through an interface circuit, or may be integrated together. This is not limited herein.

A specific connection medium between the processor 1701 and the memory 1702 is not limited in this embodiment of this application. In this embodiment of this application, the memory 1702 is connected to the processor 1701 through a bus 1703 in FIG. 17. The bus is represented by a thick line in FIG. 17. A manner of connection between other components is schematically described, and is not limited thereto. The bus may be classified as an address bus, a data bus, a control bus, and the like. For ease of representation, only one thick line is used to represent the bus in FIG. 17, but this does not mean that there is only one bus or only one type of bus.

A specific connection medium between the processor 1701 and the memory 1702 is not limited in this embodiment of this application. In this embodiment of this application, the memory 1702 is connected to the processor 1701 through a bus 1703 in FIG. 17. The bus is represented by a thick line in FIG. 17. A manner of connection between other components is schematically described, and is not limited thereto. The bus may be classified as an address bus, a data bus, a control bus, and the like. For ease of representation, only one thick line is used to represent the bus in FIG. 17, but this does not mean that there is only one bus or only one type of bus.

Based on a same technical concept, an embodiment of this application further provides a chip. The chip may be coupled to a memory, or the memory may be integrated inside the chip. This is not limited herein. The chip may read and execute program instructions stored in the memory, to implement the overall procedure in which the BBU or the RRU processes the downlink signal or the uplink signal according to the foregoing embodiments.

It should be understood that the terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are used to distinguish between a plurality of objects, and are not intended to limit an order, a time sequence, priorities, or importance of the plurality of objects. For example, first information and second information are merely used to distinguish between different indication information, and do not indicate different priorities, importance, or the like of the two types of information.

It should be understood that in embodiments of this application, sequence numbers of the foregoing processes do not mean an execution sequence. An execution sequence of the processes should be determined based on functions and internal logic of the processes, and should not constitute any limitation on the implementation processes of embodiments of this application.

In addition, the term "for example" in embodiments of this application is used to represent an example or a description. Any embodiment or implementation solution described as an "example" in embodiments of this application should not be explained as being more preferred than another embodiment or implementation solution. That is, using the term "example" is intended to describe a concept in a specific manner.

It should be understood that the processor mentioned in embodiments of this application may be implemented by hardware or software. When the processor is implemented by the hardware, the processor may be a logic circuit, an integrated circuit, or the like. When the processor is implemented by software, the processor may be a general-purpose processor, and is implemented by reading software code stored in the memory.

For example, the processor may be a central processing unit (central processing unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor, or the like.

It should be understood that the memory mentioned in this embodiment of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification is intended to include but is not limited to these memories and any memory of another proper type.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. A nonlinear compensation method, applied to a first communication apparatus, wherein the method is **characterized by**:
generating a synthetic optical correlation code, wherein the synthetic optical correlation code indicates a working mode of one of at least one second communication apparatus connected to the first communication apparatus, the working mode comprises a transmission mode of a data signal or a transmission mode of a feedback signal, different second communication apparatuses correspond to different synthetic optical correlation codes, and the feedback signal indicates a nonlinear distortion characteristic of an optoelectronic element on a transmission link from the first communication apparatus to the second communication apparatus; and
sending the synthetic optical correlation code to the second communication apparatus;
wherein the first communication apparatus is connected to a plurality of second communication apparatuses via a radio over fiber network, and a feedback link is sent from the second communication apparatuses to the first communication apparatus;
wherein the method further comprises:
receiving a feedback signal from the second communication apparatus, and performing, based on the feedback signal, nonlinear compensation on the optoelectronic element on the transmission link from the first communication apparatus to the second communication apparatus.

2. The method according to claim 1, wherein the generating a synthetic optical correlation code comprises:
modulating to-be-sent signals onto a plurality of optical carriers of different wavelengths, to obtain a plurality of optical signals obtained through modulation; and
combining the plurality of optical signals obtained through modulation, to generate the synthetic optical correlation code.

3. The method according to claim 1, wherein the generating a synthetic optical correlation code comprises:
generating a plurality of optical carriers, wherein different optical carriers have different wavelengths;
combining the plurality of optical carriers; and
modulating the plurality of combined optical carriers, to generate the synthetic optical correlation code.

4. A communication apparatus, comprising:
at least one processor; and
a memory communicatively connected to the at least one processor, wherein the memory stores instructions executable by the at least one processor, and the at least one processor executes the instructions stored in the memory, so that the method according to any one of claims 1 to 3 is performed.

5. A communication system, comprising a first communication apparatus configured to perform the method according to any one of claims 1 to 3.

6. A computer-readable storage medium, wherein the computer-readable storage medium stores a computer program, the computer program comprises program instructions, and when the program instructions are executed by a computer comprised in a communication apparatus according to claim 4, the apparatus is enabled to perform the method according to any one of claims 1 to 3.

7. A computer program product, wherein the computer program product stores a computer program, and when the computer program is executed by a computer comprised in a communication apparatus according to claim 4, the apparatus is enabled to perform the method according to any one of claims 1 to 3.

## Patentansprüche

1. Nichtlineares Kompensationsverfahren, das auf eine erste Kommunikationseinrichtung angewendet wird, wobei das Verfahren **gekennzeichnet ist durch**:
Erzeugen eines synthetischen optischen Korrelationscodes, wobei der synthetische optische Korrelationscode einen Arbeitsmodus mindestens einer zweiten Kommunikationseinrichtung anzeigt, die mit der ersten Kommunikationseinrichtung verbunden ist, wobei der Arbeitsmodus einen Übertragungsmodus eines Datensignals oder einen Übertragungsmodus eines Rückkopplungssignals umfasst, wobei verschiedene zweite Kommunikationseinrichtungen verschiedenen synthetischen optischen Korrelationscodes entsprechen und das Rückkopplungssignal eine nichtlineare Verzerrungscharakteristik eines optoelektronischen Elements auf einer Übertragungsverbindung von der ersten Kommunikationseinrichtung zur zweiten Kommunikationseinrichtung anzeigt; und
Senden des synthetischen optischen Korrelationscodes an die zweite Kommunikationseinrichtung;
wobei die erste Kommunikationseinrichtung mit einer Vielzahl von zweiten Kommunikationseinrichtungen über ein Funk-über-Faser ("Radio over Fiber") - Netzwerk verbunden ist und eine Rückkopplungsverbindung von den zweiten Kommunikationseinrichtungen an die erste Kommunikationseinrichtung gesendet wird;
wobei das Verfahren ferner umfasst:
Empfangen eines Rückkopplungssignals von der zweiten Kommunikationseinrichtung und Durchführen, basierend auf dem Rückkopplungssignal, einer nichtlinearen Kompensation an dem optoelektronischen Element auf der Übertragungsverbindung von der ersten Kommunikationseinrichtung zur zweiten Kommunikationseinrichtung.

2. Verfahren gemäß Anspruch 1, wobei das Erzeugen eines synthetischen optischen Korrelationscodes umfasst:
Modulieren von zu sendenden Signalen auf eine Vielzahl von optischen Trägern verschiedener Wellenlängen, um eine Vielzahl von durch Modulation erhaltenen optischen Signalen zu erhalten; und
Kombinieren der Vielzahl von durch Modulation erhaltenen optischen Signalen, um den synthetischen optischen Korrelationscode zu erzeugen.

3. Verfahren gemäß Anspruch 1, wobei das Erzeugen eines synthetischen optischen Korrelationscodes umfasst:
Erzeugen einer Vielzahl von optischen Trägern, wobei verschiedene optische Träger unterschiedliche Wellenlängen haben;
Kombinieren der Vielzahl von optischen Trägern; und
Modulieren der Vielzahl von kombinierten optischen Trägern, um den synthetischen optischen Korrelationscode zu erzeugen.

4. Kommunikationseinrichtung, umfassend:
mindestens einen Prozessor; und
einen Speicher, der kommunikationsfähig mit dem mindestens einen Prozessor verbunden ist, wobei der Speicher Anweisungen speichert, die durch den mindestens einen Prozessor ausgeführt werden können, und der mindestens eine Prozessor die im Speicher gespeicherten Anweisungen ausführt, so dass das Verfahren gemäß einem der Ansprüche 1 bis 3 durchgeführt wird.

5. Kommunikationssystem, umfassend eine erste Kommunikationseinrichtung, die dafür ausgelegt ist, das Verfahren gemäß einem der Ansprüche 1 bis 3 durchzuführen.

6. Computerlesbares Speichermedium, wobei das computerlesbare Speichermedium ein Computerprogramm speichert, wobei das Computerprogramm Programmanweisungen umfasst, und wenn die Programmanweisungen durch einen Computer ausgeführt werden, der in einer Kommunikationseinrichtung gemäß Anspruch 4 enthalten ist, die Einrichtung in die Lage versetzt wird, das Verfahren gemäß einem der Ansprüche 1 bis 3 durchzuführen.

7. Computerprogrammprodukt, wobei das Computerprogrammprodukt ein Computerprogramm speichert, und wenn das Computerprogramm durch einen Computer ausgeführt wird, der in einer Kommunikationseinrichtung gemäß Anspruch 4 enthalten ist, die Einrichtung in die Lage versetzt wird, das Verfahren gemäß einem der Ansprüche 1 bis 3 durchzuführen.

## Revendications

1. Procédé de compensation non linéaire, appliqué à un premier appareil de communication, dans lequel le procédé est **caractérisé par** :
la génération d'un code de corrélation optique synthétique, dans lequel le code de corrélation optique synthétique indique un mode de travail d'un d'au moins un second appareil de communication connecté au premier appareil de communication, le mode de travail comprend un mode de transmission d'un signal de données ou un mode de transmission d'un signal de rétroaction, des seconds appareils de communication différents correspondent à différents codes de corrélation optiques synthétiques et le signal de rétroaction indique une caractéristique de distorsion non linéaire d'un élément optoélectronique sur une liaison de transmission du premier appareil de communication au second appareil de communication ; et
l'envoi du code de corrélation optique synthétique au second appareil de communication ;
dans lequel le premier appareil de communication est connecté à une pluralité de seconds appareils de communication par l'intermédiaire d'un réseau radio sur fibre et une liaison de rétroaction est envoyée à partir des seconds appareils de communication au premier appareil de communication ;
dans lequel le procédé comprend en outre :
la réception d'un signal de rétroaction à partir du second appareil de communication et l'exécution, sur la base du signal de rétroaction, d'une compensation non linéaire sur l'élément optoélectronique sur la liaison de transmission du premier appareil de communication au second appareil de communication.

2. Procédé selon la revendication 1, dans lequel la génération d'un code de corrélation optique synthétique comprend :
la modulation de signaux à envoyer sur une pluralité de porteuses optiques de longueurs d'ondes différentes, pour obtenir une pluralité de signaux optiques obtenus à travers une modulation ; et
la combinaison de la pluralité de signaux optiques obtenus à travers une modulation, pour générer le code de corrélation optique synthétique.

3. Procédé selon la revendication 1, dans lequel la génération d'un code de corrélation optique synthétique comprend :
la génération d'une pluralité de porteuses optiques, dans lequel différentes porteuses optiques ont différentes longueurs d'ondes ;
la combinaison de la pluralité de porteuses optiques ; et
la modulation de la pluralité de porteuses optiques combinées, pour générer le code de corrélation optique synthétique.

4. Appareil de communication, comprenant :
au moins un processeur ; et
une mémoire connectée de manière communicative à l'au moins un processeur, dans lequel la mémoire stocke des instructions exécutables par l'au moins un processeur, et l'au moins un processeur exécute les instructions stockées dans la mémoire, de sorte que le procédé selon l'une quelconque des revendications 1 à 3 soit mis en œuvre.

5. Système de communication, comprenant un premier appareil de communication configuré pour mettre en œuvre le procédé selon l'une quelconque des revendications 1 à 3.

6. Support de stockage lisible par ordinateur, dans lequel le support de stockage lisible par ordinateur stocke un programme informatique, le programme informatique comprend des instructions de programme, et lorsque les instructions de programme sont exécutées par un ordinateur compris dans un appareil de communication selon la revendication 4, l'appareil peut mettre en œuvre le procédé selon l'une quelconque des revendications 1 à 3.

7. Produit de programme informatique, dans lequel le produit de programme informatique stocke un programme informatique, et lorsque le programme informatique est exécuté par un ordinateur compris dans un appareil de communication selon la revendication 4, l'appareil peut mettre en œuvre le procédé selon l'une quelconque des revendications 1 à 3.
